# EUROPEAN PATENT APPLICATION

(11) **EP 4 491 844 A1**
(43) Date of publication of application: **15.01.2025**
(21) Application number: 24186164.0
(22) Date of filing: 03.07.2024
(51) Int. Cl.: E21B 19/02

(54) **QUICK BAIL SYSTEM**

(30) Priority: 13.07.2023 US 202318351672
(71) Applicant: Frank's International, LLC, Houston, TX 77042 (US)
(72) Inventor: ANGELLE, Jeremy, R, Youngsville, 70592 (US)
(74) Representative: Haseltine Lake Kempner LLP

(57) **Abstract**

Apparatus and methods for extending rig bails, of which the method includes bringing a rig bail towards a connector end of a quick bail system such that an eyelet of the rig bail makes contact with a latch pin of the quick bail system so that the latch pin is moved to an open position, moving the eyelet of the rig bail to enter the connector end of the quick bail system and aligning the rig bail with the quick bail system, lowering the rig bails until the eyelet of the rig bail is fully entered into the connector end of the quick bail system, and returning the latch pin to a closed position.

## Description

### Background

A drilling rig operates to rotate a drill bit as the drill bit creates a borehole. The drill bit is connected to the drilling rig by sections of drill pipe, sometimes referred to as a pipe string. The drill pipe also provides drilling fluid to the drill bit. As the borehole is drilled deeper, additional pipe sections must be added to the pipe string. Pipe handling equipment such as elevators, can hoist pipe sections off of pipe racks into the air so they can be coupled together to form the pipe string.

Elevators can also be used to temporarily suspend entire pipe strings in the borehole. Elevators can also be used to manipulate casing and casing strings, in addition to drill pipe strings. The elevator is connected to the top drive or a conventional hook using a pair of elevator links that are also referred to as "elevator bails". The elevator bails provide a connection between the elevator and the top drive or the hook. Elevator bails are designed to hang elevators from the rig's top drive system or a conventional hook during operations. The elevator may be rotated, tilted, raised and lowered using these bails. Bails usually work in pairs. Each bail is a forged high-grade steel rod with eyelets on both upper and lower ends. The bails' upper eyelets are connected at the top drive or the conventional hook, and the lower eyelets are connected to the elevator.

Traditionally, one-piece elevator bails have a shank with an eyelet at each end of the shank manufactured as a single piece from alloy steel or other well-known suitable materials. Bails are commonly produced in set lengths. Conventionally, bails have been constructed as a unitary piece. Each pair of bails are also commonly designed and produced to be capable of supporting a given, set tonnage, such as being capable of supporting, for example, 500, 750, 1,000, 1,250, 1,500 or 2,000 tons.

When switching from drilling/tripping operations to casing operations, longer bails are needed to accommodate different equipment types. Bail changeouts are very time consuming and involve increased risk because of the cumbersome nature and manual labor is required.

There are already some solutions to this issue available in the industry. Prominent examples are link connectors and link extensions. Link connectors are s-shaped devices that include a first connecting portion, which connects to the bottom eyelet of the rig's standard bails, and a second connection portion, which connects to the upper eyelet of an additional set of bails. The link connector links two standard sets of bails together to achieve a greater overall length than would be achievable with only one standard set of bails. Such connectors are described, for example, by US Patent No. 10,502,249. While this provides the overall length required, and removes the need to disconnect the rig's bails at the top drive, it creates an additional problem since it requires additional bails of various lengths to be stored at the rig, which is inefficient and expensive. Link extensions, as disclosed in US Patent No. 10,641,305, connect to the existing rig bails, eliminating the need to remove the existing rig bails to install extra-long bails. As a result, downtime is decreased and there is no need for an additional set of extra-long elevator links. But link extensions such as the ones disclosed in US Patent No. 10,641,305, require manual removal of a pin at the extension, when installing and removing the extension into position at the rig. This requires the installer to place their hands in a pinchpoint area, increasing the risk of serious injury. This is also a time-consuming installation process, to manually remove and install pins.

Consequently, there is a need for a quick and efficient bail system that adapts to the rig's existing bails and can be manufactured in various lengths and ratings, with ability to achieve higher load ratings. There is also a need for increased safety by incorporation of safety features and avoiding manual intervention, especially at pinch-points.

### Summary

The present disclosure includes examples of a method for extending rig bails. According to at least some examples, the method includes bringing a rig bail towards a connector end of a quick bail system such that an eyelet of the rig bail makes contact with a latch pin of the quick bail system so that the latch pin is moved to an open position, moving the eyelet of the rig bail to enter the connector end of the quick bail system and aligning the rig bail with the quick bail system, lowering the rig bails until the eyelet of the rig bail is fully entered into the connector end of the quick bail system, and returning the latch pin to a closed position.

The present disclosure also includes examples of a quick bail system for extending a rig bail. According to at least some examples, the system includes a bail extender configured to connect to rig equipment, a connector at an axial end of the bail extender and configured to be brought into proximity of a rig bail, and a latch pin coupled to the connector and configured to contact an eyelet of the rig bail, such that the eyelet moves the latch pin to an open position. The eyelet of the rig bail enters the connector of the quick bail system, and the latch pin is configured to return to a closed position such that the latch pin is received through the eyelet of the rig bail and retains the eyelet in the connector.

The present disclosure further includes examples of an apparatus for extending a rig bail. According to at least some examples, the apparatus includes a bail extender, and a connector coupled to or integral with the bail extender. The connector includes a first leg and a second leg that define a receiving area therebetween, the first leg defining a first slot therethrough, and the second leg defining a second slot therethrough. The apparatus also may include a latch pin pivotally coupled to the first leg, extending through the first slot, the receiving area, and the second slot, the latch pin having a closed position in which the latch pin engages the first and second legs and is configured to transmit a force between the first and second legs and the rig bail, and an open position in which the latch pin is moved away from the second leg and permits an end of the rig bail to access the receiving area between the first and second legs.

The foregoing summary is intended merely to introduce a subset of the features more fully described of the following detailed description. Accordingly, this summary should not be considered limiting.

### Brief Description of Drawings

The accompanying drawing, which is incorporated in and constitutes a part of this specification, illustrates an embodiment of the present teachings and together with the description, serves to explain the principles of the present teachings. In the figures:
Figures 1a is an isometric view of a top drive with rig bails suspended from the top drive and a quick bail system connected thereto, according to an embodiment. Figure 1b is an isometric view of the top drive with the quick bail system interposed between the top drive and the rig bails, according to an embodiment.
Figures 2a and 2b illustrate isometric views of a connector end of a quick bail assembly from the front and back side, respectively, according to an embodiment.
Figures 3a, 3b, 3c, and 3d illustrate side views of the quick bail assembly, illustrating a process of connecting rig bails to the quick bail assembly, according to an embodiment.
Figure 4 illustrates an isometric view of the quick bail system connected to a rig bail, according to an embodiment.
Figure 5 illustrates a sectional view of the quick bail system connected to the rig bail, according to an embodiment.

### Detailed Description

Reference will now be made in detail to embodiments of the present teachings, examples of which are illustrated in the accompanying drawing. In the drawings, like reference numerals have been used throughout to designate identical elements, where convenient. The following description is merely a representative example of such teachings.

Some embodiments of the present disclosure provide a system, method and apparatus for quick, efficient and safe bail extending technique, in which the conventional time-consuming, cumbersome and risk-prone methods of bail changeouts and/or extensions are mitigated and/or avoided. When switching from drilling/tripping operations to casing operations, longer bails may be called for. Embodiments of the present disclosure provide a quick bail system that adapts existing rig bails into non-standard links. By using existing rig bails practical benefits may be realized, such as low expenses as well as increased flexibility in terms of the quick bail system being able to handle multiple sizes of rig bails and decrease rig up time as the rig bails are already rigged up.

According to an aspect, embodiments of the disclosure provide a quick bail system, including bail extenders that can be easily installed by lowering the top drive or a hook. As existing bails are used, there is increased flexibility with respect to handling of multiple sizes of rig bails, decreased rig up times as rig bails are already rigged up and lowered expenses. Furthermore, the quick bail system can be installed at wide range of angles, from vertical to horizontal.

According to another aspect, the process of extending the equipped bails is made quicker and safer for personnel and equipment by eliminating the potential for dropped objects and bodily injury. Such bails may also be manufactured in various lengths and ratings. In some embodiments, the bails are designed such that accidental rotation between the quick bail system and the existing rig bail is eliminated and in addition the secondary lock on the latch pin prevents it from rotating and inadvertently opening if the elevator is stacked out against the casing stump or spider, thus providing added safety.

According to yet another aspect, embodiments of the present disclosure may provide improved features that do not require manual disassembly. For example, some embodiments may use a spring latch mechanism, thus eliminating the need for removal of any part or component of the assembly when disconnecting the rig bails from the quick bail assembly.

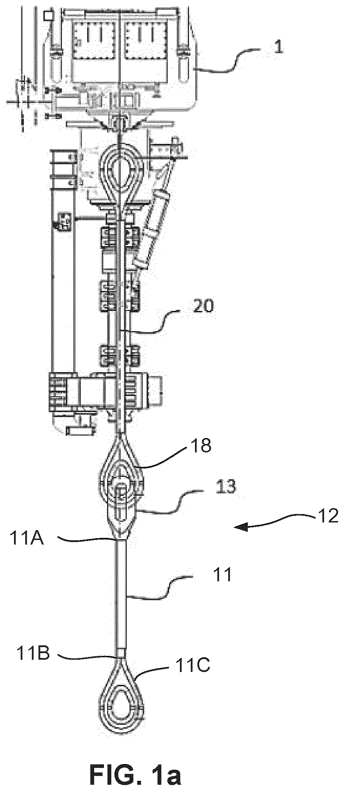

Figure 1a illustrates a simplified top drive 1, with rig bails 20 suspended from the top drive 1. The rig bails 20 can also be suspended from a hook (not shown). A quick bail system 12 is connected to the rig bails 20, specifically to a lower end 18 thereof, which may provide an eyelet, as shown. The quick bail system 12 generally includes a bail (or "bail extender") 11. In embodiments, the quick bail system 12 includes two bails 11, which may be identical for purposes of discussion herein, and which are connected to first and second bails (iterations of the rig bail 20 shown). The bail 11 includes opposing, axial ends 11A, 11B. The axial end 11A may be coupled with or formed integral to a connector 13. The connector 13 may provide the connection with the end 18 of the rig bail 20, as discussed below. The axial end 11B of the bail 11 may also include a connector 11C, e.g., an eyelet, for connecting to an elevator or another piece of rig equipment.

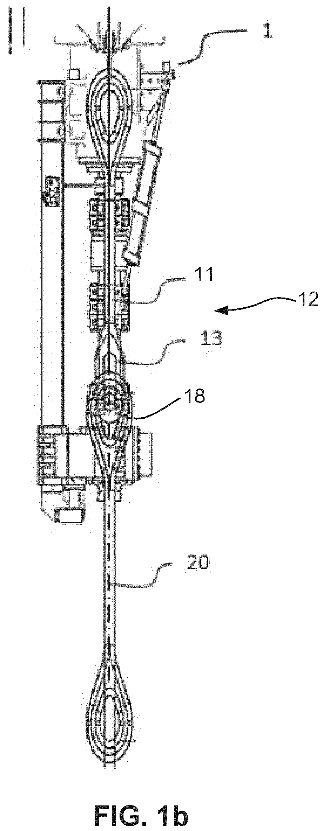

In Figure 1a, the bail 11 of the quick bail system 12 is connected to the lower end 18 of the rig bails 20. However, this relative ordering of the bails 11, 20 may be reversed. For example, as shown in Figure 1b, the bail 11 may be directly connected to the top drive 1, with the rig bail 20 connected thereto and the end (now the "upper" end) 18. In such case, the bail 11 may be oriented such that the connector 13 is at the lower end of the quick bail system 12. As such, the top drive 1 may be lowered into connection with the quick bail system 12 in Figure 1b, whereas the rig bail 20 may be lowered, by lowering the top drive 1, into connection with the quick bail system 12 of Figure 1a.

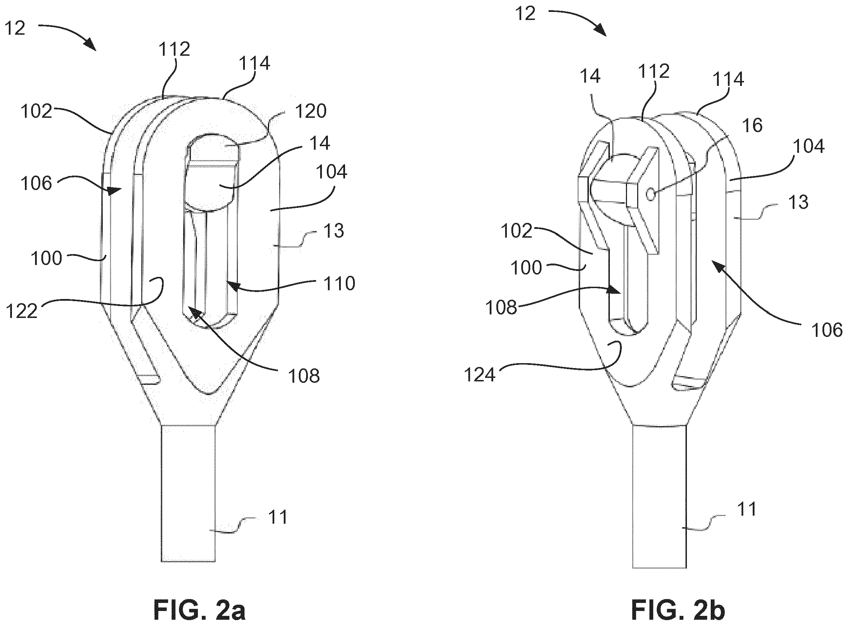

Figures 2a and 2b illustrate the connector 13 of the quick bail system 12, according to an embodiment. More particularly, the front side and the back side of the connector 13 of the quick bail system 12 are visible in Figures 2a and 2b, respectively.

As shown, connector 13 may include an enlarged head 100, which may be connected to the bail 11, e.g., cast, forged, or otherwise formed integrally therewith as a single part and/or welded, brazed, screwed together or otherwise formed as two or more parts that are coupled together. The connector 13 may define two legs 102, 104, which may extend generally parallel to one another, such that the legs 102, 104 define a receiving area 106 therebetween. Aligned slots 108, 110 through the legs 102, 104, respectively, extend transverse to the receiving area 106 and provide access through the legs 102, 104 thereto. In at least some embodiments, the legs 102, 104 may have rounded ends 112, 114, as shown, that fully enclose the slots 108, 110.

The latch pin 14 may be coupled to one of the legs 102, e.g., via a hinge 16. The latch pin 14 may extend through both of the slots 108, 110, such that the latch pin 14 spans the receiving area 106 and extends through both of the legs 102, 104. The latch pin 14 may be pivotally coupled to the leg 102 via the hinge 16 such that downward (in this view) force applied to the latch pin 14 may pivot the latch pin 14 about the hinge 16, away from the end 114 of the leg 104. The latch pin 14 may also include a retaining lip 120, which may be configured to slide against a face 122 of the leg 104 that is opposite to the receiving area 106, when the latch pin 14 engages the rounded end 114. A bottom side (in this view) of the latch pin 14 may be profiled to receive an eyelet of a bail, as will be discussed in greater detail below.

In a specific embodiment, the hinge 16 may connect the latch pin 14 to a face 124 of the leg 102 that faces away from the receiving area 106. The hinge 16 may include a biasing member, such as a torsion spring, such that the hinge 16 biases the latch pin 14 toward the rounded end 114 of the leg 104.

Accordingly, the latch pin 14 has a closed position, as shown in Figures 2a and 2b, in which the latch pin 14 extends through the legs 102, 104, spans the receiving area 106, and engages the rounded ends 112, 114. As such, in the closed position, the latch pin 14 may support an axial load, e.g., downwardly directed (in this view), such as a tubular connected to an elevator that is connected to an opposite axial end of the bail 11. The latch pin 14 may also include an open position, in which the latch pin 14 is pivoted away from the end 114 of the second leg 104, permitting access to the receiving area 106, as will be described in greater detail below.

The quick bail system 12 may be shipped and supported in a canister that can be placed on top of the rotary or in a spider. When the top drive 1 is lowered as depicted in Figures 1a and 1b, the quick bail system 12 automatically locks into place. The quick bail system 12 is thus installed and ready to run.

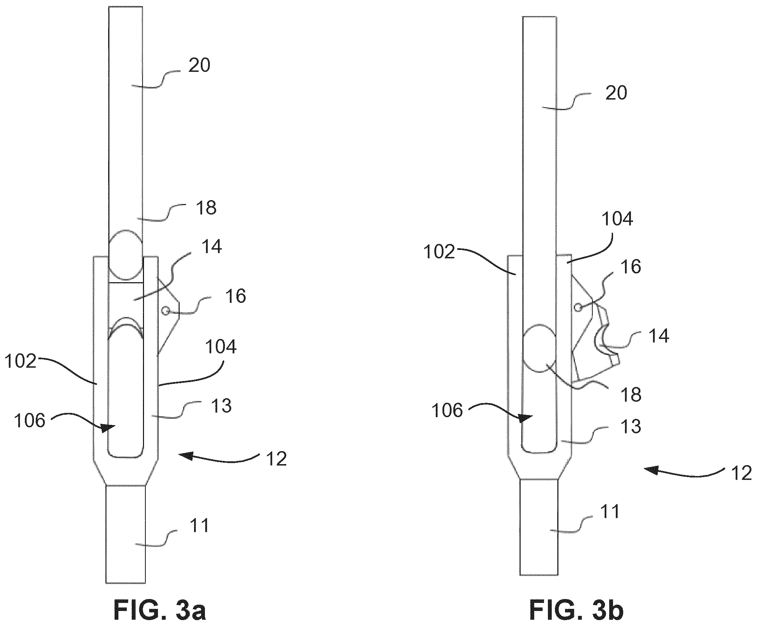

Figures 3a-3d illustrate a process of attaching the quick bail system 12 to the rig bail 20, according to an embodiment. Beginning with Figure 3a, the rig bail 20 may be lowered towards the quick bail system 12 at the connector 13. At this point, the lower end 18 of the rig bail 20 has not entered the receiving area 106 between the legs 102, 104 of the connector 13, and the latch pin 14 is in the closed position. When the rig bail 20 is lowered further, the rig bail 20 engages and pushes against the latch pin 14. The latch pin 14 thus pivots about its hinge 16 into the open position as shown in Figure 3b, such that the lower end 18 (e.g., an eyelet, as shown in Figure 1a) of the rig bail 20 is able to enter the receiving area 106 of the connector 13.

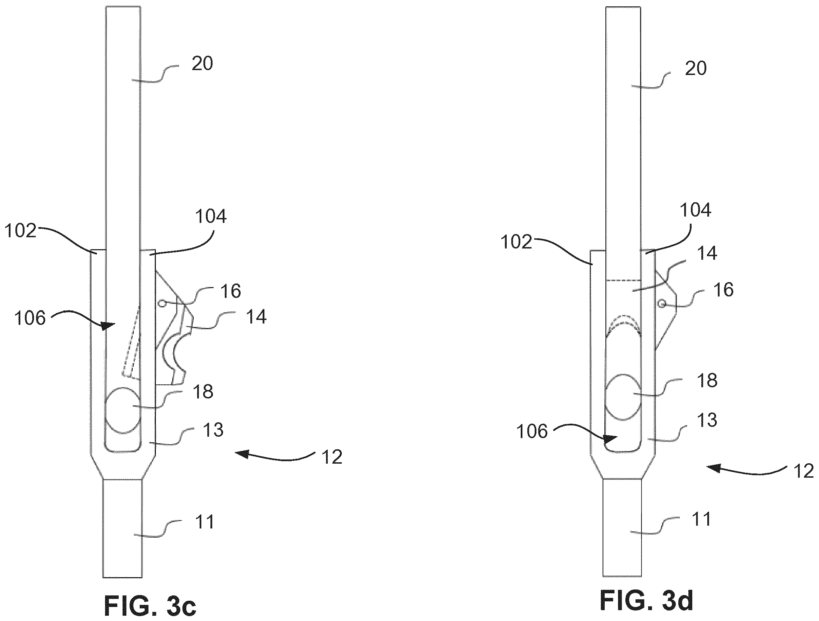

Eventually, the lower end 18 of the rig bail 20 proceeds far enough into the receiving area 106 such that the lower end 18 disengages from the latch pin 14 (this may be considered "aligning" the end 18 (providing an eyelet, for example) of the rig bail 20 with the connector 13). The latch pin 14, biased toward the closed position by the hinge 16, may then pivot back toward its closed position, as shown in Figures 3c and 3d. Once the latch pin 14 reaches the closed position again, the lower end 18 of the rig bail 20 is mated with the quick bail system 12 and cannot be removed by lifting the rig bail 20, as the latch pin 14 once again spans the receiving area 106. Thus, after the latch pin 14 is closed, the locking is complete and the quick bail system 12 is installed, as shown in Figure 3d. Accordingly, in the closed and mated configuration of Figure 3d, the latch pin 14 is configured to bear against the legs 102, 104 to transmit a downwardly-directed axial load on the bail 11 to the rig bail 20.

It will be appreciated that the quick bail system 12 of the present disclosure may permit connection of the bail 11 and the rig bail 20, even if they are not coaxial. For example, the rig bail 20 may be oriented 90 degrees (e.g., horizontal) to the bail 11, and a connection may still be accomplished as long as the end 18 drives the latch pin 14 to pivot as discussed.

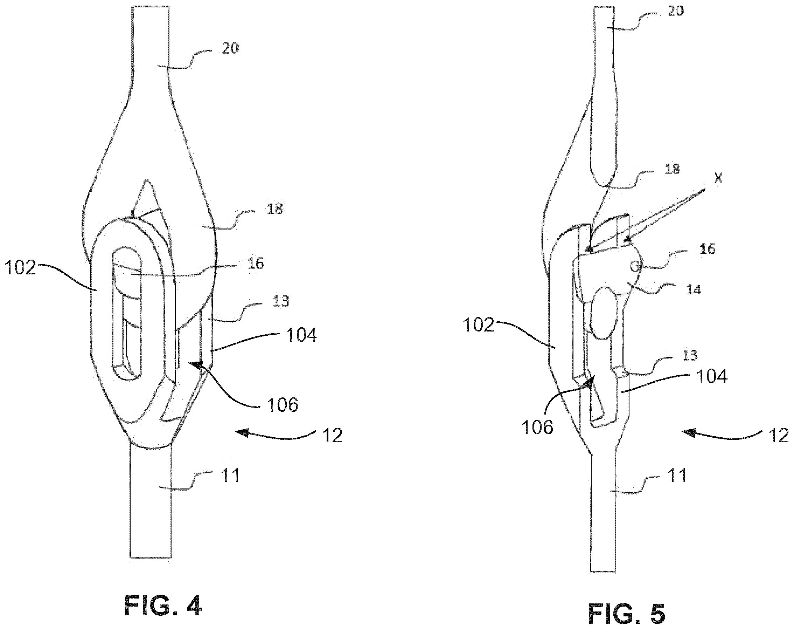

Figure 4 illustrates a perspective view of the connection between the lower end 18 of the rig bail 20 and the connector 13 of the quick bail system 12, according to an embodiment. Figure 5 illustrates a similar view, but in section, showing the latch pin 14 engaging the lower end 18, according to an embodiment. As mentioned above, the latch pin 14 may be profiled to receive the lower end 18, e.g., on the under-side of the latch pin 14. In this view, the under-side of the latch pin 14 is seen having a semi-circular profile, so as to receive the generally cylindrical cross-section of the lower end 18.

The quick bail system 12 may mitigate or eliminate rotation between the quick bail system 12 and the rig bail 20, as the lower end 18 is entrained in the receiving area 106 between the legs 102, 104. As shown in Figure 5, a load bearing structure X is provided by the legs 102, 104 of the connector 13. The hinge 16 thus may not take any loads applied to the latch pin 14.

The latch pin 14 acts as a safety lock and also inhibits rotation of the existing rig bail 20 after installation. Once the quick bail system 12 is installed, if the rig bail 20 moves further downwards relative to the bail 11, the latch pin 14 remains closed, as the end 18 bottoms out against the connector 13 before the latch pin 14 is caused to open. This prevents any inadvertent disengagement of the quick bail system 12 from the rig bail 20 during operation.

To disengage the quick bail system 12, the rig bail 20 is moved vertically, or the bail 11 is pivoted to horizontal, such that the rig bail 20 and the bail 11 are approximately at 90 degrees to one another. The latch pin 14 may then pivot under the weight of the bail 11 and/or additional downward force, such that the latch pin 14 opens and the quick bail system 12 is released and may slide away until fully disengaged from the rig bail 20. Displacement of the bail 11 thus forces the latch pin 14 to fully pivot to its open position, out of the way, and the initial movement had partially started the rotation. Both the installation and disengagement can thus be performed without manual intervention, thus enhancing safety.

In at least some embodiments, the quick bail system 12 may not call for additional bails for different sizes and tonnage, or to accommodate different equipment types. In some embodiments, bail changeout may be avoided by using an embodiment of the quick bail system 12.

The foregoing describes preferred embodiments of the invention and is given by way of example only. The invention is not limited to any of the specific features described herein but includes all variations thereof within the scope of the appended claims.

The following numbered statements also form part of the present disclosure:
Statement 1. A method for extending rig bails, comprising:
   bringing a rig bail towards a connector end of a quick bail system such that an eyelet of the rig bail makes contact with a latch pin of the quick bail system so that the latch pin is moved to an open position;
   moving the eyelet of the rig bail to enter the connector end of the quick bail system and aligning the rig bail with the quick bail system;
   lowering the rig bails until the eyelet of the rig bail is fully entered into the connector end of the quick bail system; and
   returning the latch pin to a closed position.
Statement 2. The method of Statement 1, wherein moving the eyelet of the rig bail towards the quick bail system causes the latch pin of the quick bail system to be moved to the open position to allow the eyelet of the rig bail to enter the connection end of the quick bail system and mate with the quick bail system.
Statement 3. The method of Statement 1 or 2, wherein, after the rig bails are fully lowered into the quick bail system, the latch pin returns to the closed position by a spring mechanism and the quick bail system locks into place.
Statement 4. The method of Statement 3, wherein to disengage the rig bail from the quick bail system, the quick bail system is moved with relative to the rig bail such that the latch pin is rotated into open position the rig bail is released from the quick bail system.
Statement 5. The method of any of the preceding Statements, wherein, when the latch pin is in the closed position, a hinge of the latch pin does not take a load of the rig bail.
Statement 6. The method of any of the preceding Statements, wherein the latch pin in closed position inhibits rotation of the rig bails.
Statement 7. A quick bail system for extending a rig bail, the assembly comprising:
   a bail extender configured to connect to rig equipment;
   a connector at an axial end of the bail extender and configured to be brought into proximity of a rig bail; and
   a latch pin coupled to the connector and configured to contact an eyelet of the rig bail, such that the eyelet moves the latch pin to an open position,
   wherein the eyelet of the rig bail enters the connector of the quick bail system, and
   wherein the latch pin is configured to return to a closed position such that the latch pin is received through the eyelet of the rig bail and retains the eyelet.
Statement 8. The quick bail assembly of Statement 7, wherein the latch pin is configured to be moved to an open position by the eyelet of the rig bail, such that the eyelet of the rig bail pushes the latch pin toward an open position, permitting the eyelet to enter the connector.
Statement 9. The quick bail assembly of Statement 7 or 8, further comprising hinge connecting the latch pin to the connector, wherein the hinge is configured to bias the latch pin toward the closed position so as to return the latch pin to the closed position after the eyelet is received into the connector.
Statement 10. The quick bail assembly of Statement 9, wherein when the latch pin is in the closed position, the latch pin transmits axial loads to the connector, and wherein the hinge does not take the load of the rig bail.
Statement 11. The quick bail assembly of Statement 9 or 10, wherein the quick bail assembly is moved with respect to the rig bail such that the latch pin is pivoted to the open position and the rig bail is released from the quick bail assembly.
Statement 12. The quick bail assembly of any of Statements 7 to 11, wherein the connector is configured to inhibit rotation of the one of the rig bail relative to the bail extender.
Statement 13. An apparatus for extending a rig bail, comprising:
   a bail extender;
   a connector coupled to or integral with the bail extender, wherein the connector comprises a first leg and a second leg that define a receiving area therebetween, the first leg defining a first slot therethrough, and the second leg defining a second slot therethrough; and
   a latch pin pivotally coupled to the first leg, extending through the first slot, the receiving area, and the second slot, the latch pin having a closed position in which the latch pin engages the first and second legs and is configured to transmit a force between the first and second legs and the rig bail, and an open position in which the latch pin is moved away from the second leg and permits an end of the rig bail to access the receiving area between the first and second legs.
Statement 14. The apparatus of Statement 13, further comprising a hinge that connects the latch pin to the first leg, wherein the hinge biases the latch pin to the closed position.
Statement 15. The apparatus of Statement 14, wherein the hinge is connected to a face of the first leg that is opposite to the receiving area.
Statement 16. The apparatus of any of Statements 13 to 15, wherein the latch pin comprises a distal end that engages the second leg, and a lip that is configured to engage a face of the second leg that is opposite to the receiving area, when the latch pin is in a closed position.
Statement 17. The apparatus of any of Statements 13 to 16, further comprising a second connector end coupled to or integral with the bail extender and configured to engage an elevator for lifting tubulars.
Statement 18. The apparatus of any of Statements 13 to 17, wherein the rig bail comprises a first rig bail, the bail extender comprises a first bail extender, and the connector comprises a first connector, the apparatus further comprising a second bail extender and a second connector coupled to or integral therewith, the first bail extender being configured to connect to the first rig bail via the first connector, and the second bail extender being configured to connect to a second rig bail via the second connector.
Statement 19. The apparatus of any of Statements 13 to 18, wherein the latch pin has a profiled under side configured to receive an end of the rig bail.
Statement 20. The apparatus of any of Statements 13 to 19, wherein the receiving area extends transverse to the first and second slots.
Statement 21. The apparatus of any of Statements 13 to 20, wherein the latch pin is configured to be pivoted from the closed position to the open position by engagement with the end of the rig bail.

## Claims

1. A method for extending rig bails, comprising:
bringing a rig bail towards a connector end of a quick bail system such that an eyelet of the rig bail makes contact with a latch pin of the quick bail system so that the latch pin is moved to an open position;
moving the eyelet of the rig bail to enter the connector end of the quick bail system and aligning the rig bail with the quick bail system;
lowering the rig bails until the eyelet of the rig bail is fully entered into the connector end of the quick bail system; and
returning the latch pin to a closed position.

2. The method of claim 1, wherein moving the eyelet of the rig bail towards the quick bail system causes the latch pin of the quick bail system to be moved to the open position to allow the eyelet of the rig bail to enter the connection end of the quick bail system and mate with the quick bail system.

3. The method of claim 1 or 2, wherein, after the rig bails are fully lowered into the quick bail system, the latch pin returns to the closed position by a spring mechanism and the quick bail system locks into place.

4. The method of claim 3, wherein to disengage the rig bail from the quick bail system, the quick bail system is moved with relative to the rig bail such that the latch pin is rotated into open position the rig bail is released from the quick bail system.

5. The method of any of the preceding claims, wherein, when the latch pin is in the closed position, a hinge of the latch pin does not take a load of the rig bail, and wherein the latch pin in closed position inhibits rotation of the rig bails.

6. A quick bail system for extending a rig bail, the assembly comprising:
a bail extender configured to connect to rig equipment;
a connector at an axial end of the bail extender and configured to be brought into proximity of a rig bail; and
a latch pin coupled to the connector and configured to contact an eyelet of the rig bail, such that the eyelet moves the latch pin to an open position,
wherein the eyelet of the rig bail enters the connector of the quick bail system, and
wherein the latch pin is configured to return to a closed position such that the latch pin is received through the eyelet of the rig bail and retains the eyelet.

7. The quick bail assembly of claim 6, wherein the latch pin is configured to be moved to an open position by the eyelet of the rig bail, such that the eyelet of the rig bail pushes the latch pin toward an open position, permitting the eyelet to enter the connector.

8. The quick bail assembly of claim 6 or 7, further comprising hinge connecting the latch pin to the connector, wherein the hinge is configured to bias the latch pin toward the closed position so as to return the latch pin to the closed position after the eyelet is received into the connector.

9. The quick bail assembly of claim 8, wherein when the latch pin is in the closed position, the latch pin transmits axial loads to the connector, and wherein the hinge does not take the load of the rig bail.

10. The quick bail assembly of claim 8 or 9, wherein the quick bail assembly is moved with respect to the rig bail such that the latch pin is pivoted to the open position and the rig bail is released from the quick bail assembly.

11. The quick bail assembly of any of claims 6 to 10, wherein the connector is configured to inhibit rotation of the one of the rig bail relative to the bail extender.

12. An apparatus for extending a rig bail, comprising:
a bail extender;
a connector coupled to or integral with the bail extender, wherein the connector comprises a first leg and a second leg that define a receiving area therebetween, the first leg defining a first slot therethrough, and the second leg defining a second slot therethrough; and
a latch pin pivotally coupled to the first leg, extending through the first slot, the receiving area, and the second slot, the latch pin having a closed position in which the latch pin engages the first and second legs and is configured to transmit a force between the first and second legs and the rig bail, and an open position in which the latch pin is moved away from the second leg and permits an end of the rig bail to access the receiving area between the first and second legs.

13. The apparatus of claim 12, further comprising a hinge that connects the latch pin to the first leg, wherein the hinge biases the latch pin to the closed position, and wherein the hinge is connected to a face of the first leg that is opposite to the receiving area.

14. The apparatus of any of claims 12 to 13, wherein the latch pin comprises a distal end that engages the second leg, and a lip that is configured to engage a face of the second leg that is opposite to the receiving area, when the latch pin is in a closed position.

15. The apparatus of any of claims 12 to 14, further comprising a second connector end coupled to or integral with the bail extender and configured to engage an elevator for lifting tubulars.

16. The apparatus of any of claims 12 to 15, wherein the rig bail comprises a first rig bail, the bail extender comprises a first bail extender, and the connector comprises a first connector, the apparatus further comprising a second bail extender and a second connector coupled to or integral therewith, the first bail extender being configured to connect to the first rig bail via the first connector, and the second bail extender being configured to connect to a second rig bail via the second connector.

17. The apparatus of any of claims 12 to 16, wherein the latch pin has a profiled under side configured to receive an end of the rig bail.

18. The apparatus of any of claims 12 to 17, wherein the receiving area extends transverse to the first and second slots.

19. The apparatus of any of claims 12 to 18, wherein the latch pin is configured to be pivoted from the closed position to the open position by engagement with the end of the rig bail.
